# EUROPÄISCHE PATENTSCHRIFT

(11) **EP 3 145 729 B1**
(45) Veröffentlichungstag und Bekanntmachung des Hinweises auf die Patenterteilung: **11.09.2019**
(21) Anmeldenummer: 15704019.7
(22) Anmeldetag: 13.02.2015
(51) Int. Cl.: B60C 9/20

(54) **FAHRZEUGLUFTREIFEN**
VEHICLE PNEUMATIC TYRE
PNEUMATIQUE POUR VÉHICULES

(30) Priorität: 19.05.2014 DE 102014209423
(43) Veröffentlichungstag der Anmeldung: 29.03.2017
(73) Patentinhaber: Continental Reifen Deutschland GmbH, 30165 Hannover (DE)
(72) Erfinder: LACKO, Michal, 020 01 Puchov (SK); GEHLAUF, Matthias, 31319 Sehnde (DE); WACHMANN, Fabian, 30419 Hannover (DE)
(74) Vertreter: Finger, Karsten
(86) Internationale Anmeldenummer: PCT/EP2015/053048
(87) Internationale Veröffentlichungsnummer: WO 2015/176829

(56) Entgegenhaltungen:
- WO-A1-2014/125794
- FR-A1- 2 566 334

## Beschreibung

Die Erfindung betrifft einen Fahrzeugluftreifen für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die in radialer Richtung R am weitesten innen angeordnete, erste Gürtellage mit parallelen in Gummi eingebetteten Festigkeitsträgern, die auf der ersten Gürtellage angeordnete zweite Gürtellage mit parallelen in Gummi eingebetteten Festigkeitsträgern, die auf der zweiten Gürtellage angeordnete dritte Gürtellage mit parallelen in Gummi eingebetteten Festigkeitsträgern und die auf der dritten Gürtellage angeordnete vierte Gürtellage mit parallelen in Gummi eingebetteten Festigkeitsträgern ausgebildet ist.

Herkömmliche Nutzfahrzeugluftreifen weisen üblicherweise einen Vierlagengürtel mit sogenannter Dreieckskonfiguration auf, bei der zwei Arbeitslagen in radialer Richtung aufeinander angeordnet sind, deren Stahlkorde jeweils einen Winkel von ca. 15° bis 30° zur Umfangsrichtung aufweisen, wobei die Stahlkorde der einen Arbeitslage und die der zweiten Arbeitslage in unterschiedlicher axialer Richtung A geneigt sind. Die Arbeitslagen bilden hierdurch einen Kreuzverband. Unterhalb der Arbeitslagen befindet sich bei derartigen Gürteln üblicherweise eine als Sperrlage ausgebildete Gürtellage, deren Stahlkorde einen Winkel von 45° bis 60° zur Umfangsrichtung aufweisen, wodurch die Korde der Arbeitslagen und der Sperrlage einen Dreiecksverband bilden. Diese Konfiguration mit zwei Arbeitslagen und darunter angeordneter Sperrlage bietet eine Möglichkeit zur ersten Optimierung des Abriebverhaltens. Darüber hinaus ist ein Wandern von Rissen aus der unteren Arbeitslage in die Karkasse trotz Sperrlage in geringem Maße noch möglich. Zusätzlich ist oberhalb der beiden Arbeitslagen üblicherweise eine die vierte Gürtellage bildende zusätzliche Schutzlage ausgebildet, deren Stahlkorde ebenfalls einen Winkel von ca. 15° bis 30° zur Umfangsrichtung des Fahrzeugreifens aufweisen. Derartige Gürtel weisen dennoch eine beschränkte Umfangssteifigkeit auf, die zu überhöhtem ungleichmäßigem Abrieb des Reifens führen kann.

Es ist auch bekannt, Nutzfahrzeugluftreifen mit einer Vierlagenanordnung auszubilden mit einer radial inneren Sperrlage mit Stahlkorden, die einen Winkel von ca. 45° bis 65° zur Umfangsrichtung einschließen, mit über der Sperrlage ausgebildeten zwei Arbeitslagen, die in herkömmlicher Weise einen Kreuzverband ihrer Stahlkorde bilden mit einer Ausrichtung der Stahlkorde von jeweils ca. 15° bis 30°, und mit einer radial außerhalb der beiden Arbeitslagen auf die äußere Arbeitslage ausgebildeten vierten Gürtellage, die als sogenannte Nullgrad-Lage ausgebildet ist, wobei deren Festigkeitsträger aus Stahlkorden im Wesentlichen in Umfangsrichtung ausgerichtet sind mit einem Winkel von 0° bis 2,5° zur Umfangsrichtung. Bei derartigen Ausbildungen wird die Umfangssteifigkeit des Gürtels erhöht, was sich positiv auf die Haltbarkeit des Gürtels auswirkt. Die innere Arbeitslage ist jedoch mit verbleibender Beweglichkeit ausgebildet. Dies kann Haltbarkeit und Abrieb auch noch unbeabsichtigt beeinträchtigen. Ein Wandern von Rissen aus der unteren Arbeitslage in die Karkasse ist auch hier weiterhin in geringem Maße noch möglich.

Darüber hinaus ist gelegentlich - beispielsweise aus der WO2011/131383A1 - eine Ausbildung eines Nutzfahrzeugluftreifens mit einer Vier-Lagen-Gürtelanordnung vorgeschlagen worden mit einer radial inneren Sperrlage mit Stahlkorden, die einen Winkel von 50° zur Umfangsrichtung einschließen. Radial außerhalb der Sperrlage sind zwei Arbeitslagen ausgebildet. Eine 0°-Lage ist radial zwischen den beiden Arbeitslagen ausgebildet ist. Die beiden Arbeitslagen sind bei diesen Ausbildungen weiterhin im Kreuzverband ausgebildet und ihre Stahlkorde sind mit Winkeln von jeweils 20° zur Umfangsrichtung ausgerichtet. Derartige Ausbildungen ermöglichen eine hohe Umfangssteifigkeit und gegenüber einem herkömmlichen Nutzfahrzeugluftreifen eine verbesserte Haltbarkeit und ein verbessertes Abriebsbild. Ein Wandern von Rissen aus der unteren Arbeitslage in die Karkasse ist auch hier weiterhin in geringem Maße noch möglich.

Aus der FR 2566334 A1 ist ein Fahrzeugluftreifen gemäß den Merkmalen des Oberbegriffs von Anspruch 1 bekannt.

Der Erfindung liegt die Aufgabe zugrunde einen derartigen Fahrzeugluftreifen für Nutzfahrzeuge mit wenigstens vier Gürtellagen zu schaffen, bei dem in einfacher Weise unter Nutzung der Vorteile der Ausbildung eines Vierlagengürtels mit zwei Arbeitslagen, und einer Sperrlage ohne zusätzlichen Aufwand zusätzlicher Schutz gegen das Wandern von Rissen aus der unteren Arbeitslage auf die Karkasse ermöglicht und dabei der Abrieb verbessert werden kann.

Die Aufgabe wird erfindungsgemäß durch die Ausbildung eines Fahrzeugluftreifens für Nutzfahrzeuge mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens vier von radial innen nach radial außen auf einander liegend angeordneten Gürtellagen ausgebildet ist, wobei die von den vier Gürtellagen in radialer Richtung R am weitesten innen angeordnete, erste Gürtellage mit parallelen in Gummi eingebetteten Festigkeitsträgern, die auf der ersten Gürtellage angeordnete zweite Gürtellage mit parallelen in Gummi eingebetteten Festigkeitsträgern, die auf der zweiten Gürtellage angeordnete dritte Gürtellage mit parallelen in Gummi eingebetteten Festigkeitsträgern und die auf der dritten Gürtellage angeordnete vierte Gürtellage mit parallelen in Gummi eingebetteten Festigkeitsträgern ausgebildet ist, gemäß den Merkmalen von Anspruch 1 gelöst, bei dem die dritte Gürtellage und die vierte Gürtellage Arbeitslagen sind, bei denen die Festigkeitsträger der dritten Gürtellage in ihrer Ausrichtung einen Winkel α zur Umfangsrichtung U mit 10°≤α≤<45° und die Festigkeitsträger der vierten Gürtellage in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger der dritten Gürtellage eine entgegengesetzte axiale Neigungsrichtung zu den Festigkeitsträgern der vierten Gürtellage aufweisen, und bei dem die Festigkeitsträger der ersten Gürtellage in ihrer Ausrichtung einen Winkel β zur Umfangsrichtung U mit 0°≤β≤5° einschließen und die Festigkeitsträger der zweiten Gürtellage in ihrer Ausrichtung einen Winkel ε zur Umfangsrichtung U mit 40°≤ε≤75°, wobei die erste Gürtellage in ihrer axialen Erstreckung im Fahrzeugluftreifen kleiner ausgebildet ist als die dritte und die vierte Gürtellage und kleiner oder gleich der axialen Erstreckung der zweiten Gürtellage des Gürtels.

Die Ausbildung ermöglicht die Beibehaltung der hinsichtlich guter Kraftübertragung in Umfangs- und Querrichtung und geringem Abrieb vorteilhaften Ausbildung mit zwei Arbeitslagen und radial innerhalb der Arbeitslagen angeordneten inneren Sperrlage. Die zusätzliche Ausbildung der ersten, radial innerhalb der Sperrlage angeordneten Gürtellage als Nullgradlage bewirkt einen zusätzlichen Schutz gegen das Wandern von Rissen aus der unteren Arbeitslage in die Karkasse. Darüber hinaus kann das Abriebverhalten weiter vergleichmäßigt werden. Die Ausbildung der axialen Erstreckung der ersten Gürtellage ermöglicht einen gleichmäßigen Steifigkeitsanstieg von Gürtelkante zur Gürtelmitte, wodurch guter Abrieb und lange, strukturelle Haltbarkeit weiter begünstigt werden.

Besonders vorteilhaft ist die Ausbildung eines Fahrzeugluftreifens gemäß den Merkmalen von Anspruch 2, wobei in Umfangsrichtung U gesehen die Festigkeitsträger der dritten Gürtellage und die Festigkeitsträger der zweiten Gürtellage die gleiche axiale Neigungsrichtung aufweisen. Dies ermöglicht eine weiter erhöhte Haltbarkeit durch Minimierung der zwischen zweiter und dritter Gürtellage wirkenden Scherkräfte und der kontrollierten Einstellung der Steifigkeit des Gürtelpaketes.

Besonders vorteilhaft ist die Ausbildung eines Fahrzeugluftreifens gemäß den Merkmalen von Anspruch 3, wobei die dritte Gürtellage in ihrer axialen Erstreckung im Fahrzeugluftreifen größer ausgebildet ist als alle anderen Gürtellagen des Gürtels. Dies ermöglicht eine Entkopplung der dritten und vierten Gürtellage, wodurch die Haltbarkeit des Reifens weiter verbessert werden kann.

Besonders vorteilhaft ist die Ausbildung eines Fahrzeugluftreifens gemäß den Merkmalen von Anspruch **4**, wobei radial innerhalb der ersten Gürtellage eine fünfte Gürtellage angeordnet ist mit parallelen in Gummi eingebetteten Festigkeitsträgern, die in ihrer Ausrichtung einen Winkel δ zur Umfangsrichtung U des Fahrzeugluftreifens mit 40°≤δ≤75° - insbesondere mit δ =50°- einschließen, und wobei in Umfangsrichtung U des Fahrzeugreifens gesehen die Festigkeitsträger der fünften Gürtellage eine entgegengesetzte axiale Neigungsrichtung zu den Festigkeitsträgern der zweiten Gürtellage aufweisen. Die Ausbildung ermöglicht eine zusätzliche Erhöhung der Haltbarkeit der Karkasse bei Reduktion des "ply-steer"-Effektes und somit bei Vergleichmäßigung des Abriebes.

Besonders vorteilhaft zur Erzielung eines verbesserten Abriebbildes ist die Ausbildung eines Fahrzeugluftreifens gemäß den Merkmalen von Anspruch **5**, wobei in Umfangsrichtung U des Fahrzeugreifens gesehen die Festigkeitsträger der fünften Gürtellage eine gleiche axiale Neigungsrichtung zu den Festigkeitsträgern der dritten Gürtellage aufweisen. Hierdurch kann dem Auftreten des "ply-steer"-Effektes weiter entgegengewirkt und gleichmäßiger Abrieb begünstigt werden.

Besonders vorteilhaft ist die Ausbildung eines Fahrzeugluftreifens gemäß den Merkmalen von Anspruch **6**, wobei die fünfte Gürtellage in ihrer axialen Erstreckung im Fahrzeugluftreifen kleiner als die dritte Gürtellage und größer oder gleich der Breite der ersten Gürtellage ausgebildet ist. Hierdurch kann ein weiter verbessertes Abriebsbild durch vergleichmäßigte Steifigkeitsänderungen längs der axialen Erstreckung des Gürtels ermöglicht werden.

Besonders vorteilhaft ist die Ausbildung eines Fahrzeugluftreifens gemäß den Merkmalen von Anspruch **7**, wobei die Festigkeitsträger der dritten Gürtellage und die Festigkeitsträger der vierten Gürtellage Stahlkorde sind. Hierdurch kann Haltbarkeit und Rollwiderstand begünstigt werden. Darüber hinaus kann kostengünstig eine hohe Zugfestigkeit und Umfangssteifigkeit des Gürtels umgesetzt werden.

Besonders vorteilhaft ist die Ausbildung eines Fahrzeugluftreifens gemäß den Merkmalen von Anspruch **8**, wobei die Festigkeitsträger der beiden Arbeitslagen im Reifen dehnbar ausgebildet sind mit einer Dehnung D von D ≥ 0,2% bei 10% der Bruchkraft. Hierdurch kann durch Flexibilität des Gürtelpakets die Haltbarkeit des Reifens weiter begünstigt werden. Hierdurch kann ein geringer Rollwiderstand weiter begünstigt werden.

Besonders vorteilhaft ist die Ausbildung eines Fahrzeugluftreifens gemäß den Merkmalen von Anspruch **9**, wobei die Festigkeitsträger der ersten Gürtellage Festigkeitsträger aus Stahl sind. Hierdurch wird eine hohe Umfangssteifigkeit und eine gute Haltbarkeit und gleichmäßiger Abrieb weiter begünstigt. Zusätzlich wird ein kontrolliertes Reifenwachstum begünstigt. Hierdurch kann darüber hinaus ein geringer Rollwiderstand des Reifens und hohe Biegewechselfestigkeit des Gürtels begünstigt werden.

Besonders vorteilhaft ist die Ausbildung eines Fahrzeugluftreifens gemäß den Merkmalen von Anspruch **10**, wobei die Festigkeitsträger der ersten Gürtellage Stahlkorde sind, die bei 10% der Bruchkraft eine Dehnung D mit D≥ 0,2 % - insbesondere mit D ≥1% - aufweisen. Hierdurch kann in einfacher Weise die Erhebung des Gürtels im Aufbauprozess ermöglicht werden. Hierdurch wird eine hohe Umfangssteifigkeit und eine gute Haltbarkeit und gleichmäßiger Abrieb weiter begünstigt. Zusätzlich wird ein kontrolliertes Reifenwachstum und Footprint begünstigt.

Besonders vorteilhaft ist die Ausbildung eines Fahrzeugluftreifens gemäß den Merkmalen von Anspruch **11**, wobei die Festigkeitsträger der zweiten Gürtellage Stahlkorde sind. Dadurch kann in einfacher Weise eine hohe Steifigkeit des Gürtels und ein Schutz der Karkasse gegen Kompression umgesetzt werden, wodurch die Haltbarkeit des Reifens weiter begünstigt werden kann.

Besonders vorteilhaft ist die Ausbildung eines Fahrzeugluftreifens gemäß den Merkmalen von Anspruch **12**, wobei die Festigkeitsträger der fünften Gürtellage Stahlkorde sind. Hierdurch können Haltbarkeit und Rollwiderstand weiter begünstigt werden.

Die Erfindung wird im Folgenden an Hand der in den Fig.1 bis Fig.4 dargestellten Ausführungsbeispiele eines Nutzfahrzeugluftreifens radialer Bauart erläutert. Darin zeigen
- Fig.1: die Querschnittsdarstellung eines Fahrzeugluftreifens für Nutzfahrzeuge radialer Bauart,
- Fig.2: eine Draufsicht auf den Gürtel von Fig.1 gemäß Schnitt II - II von Fig.1, bei der zur Vereinfachung alle anderen Bauteile des Reifens nicht dargestellt sind,
- Fig.3: eine Querschnittsdarstellung eines Fahrzeugluftreifens analog zur Darstellung von Fig.1 mit alternativer Gürtelausbildung,
- Fig.4: Draufsicht auf den Gürtel von Fig.3 gemäß Schnitt IV - IV von Fig.3, bei der zur Vereinfachung alle anderen Bauteile des Reifens nicht dargestellt sind.

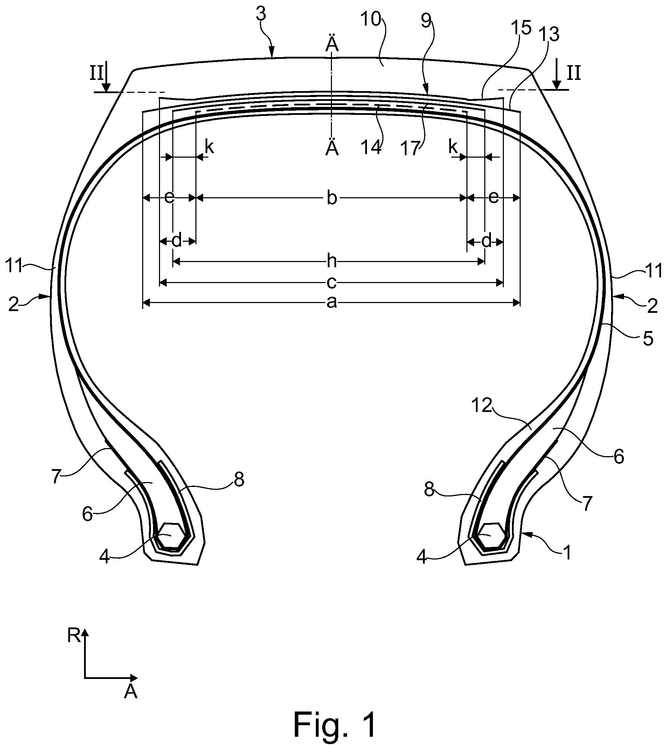

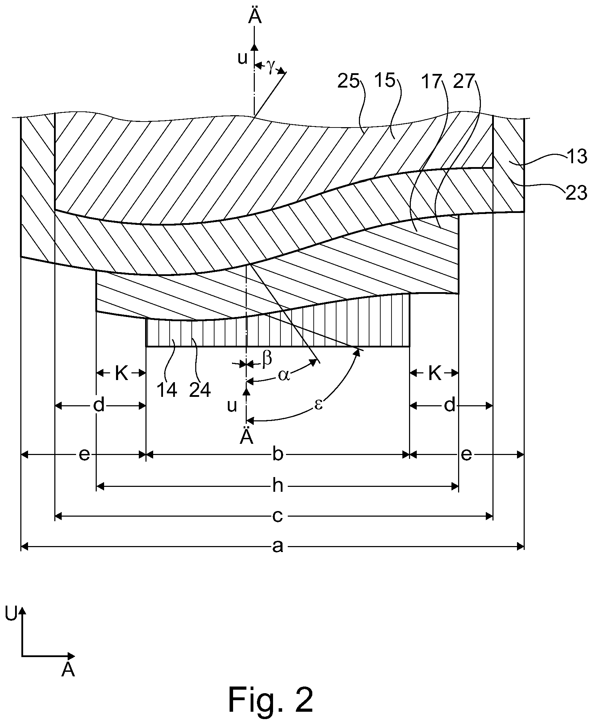

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich (Kopfbereich) 3. Die Seitenwände sind an ihrem in radialer Richtung nach innen weisenden Erstreckungsende jeweils mit einem Wulstbereich 1 ausgebildet, in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem, in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung A entlang der radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 6. Die Karkasse 5 ist in bekannter, nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden -, welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem, besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone (des Reifenkopfes) 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus vier in radialer Richtung R von innen nach außen übereinander und aufeinanderliegend angeordneten Gürtellagen 14,17, 13 und 15 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die in radialer Richtung R am weitesten innen angeordnete Gürtellage 14 des Gürtels bildet die erste Gürtellage 14. Die in radialer Richtung R außerhalb der ersten Gürtellage 14 auf der ersten Gürtellage 14 angeordnete Gürtellage 17 bildet die zweite Gürtellage 17. Die in radialer Richtung R außerhalb der zweiten Gürtellage 17 auf der zweiten Gürtellage 17 angeordnete Gürtellage 13 bildet die dritte Gürtellage 13. Die in radialer Richtung R außerhalb der dritten Gürtellage 13 auf der dritten Gürtellage 13 angeordnete Gürtellage 15 bildet die vierte Gürtellage 15.

Die Gürtellage 13 und die Gürtellage 15 sind als Arbeitslagen des Reifens ausgebildet und erstrecken sich jeweils in Umfangsrichtung U über den gesamten Umfang des Fahrzeugluftreifens in Berührkontakt zu einander und in axialer Richtung A von linker Reifenschulter bis zur rechten Reifenschulter. Die Arbeitslage 13 ist aus einer Lage von in Gummi eingebetteten fadenförmigen parallelen Festigkeitsträgern 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α ≤ 45°. Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10°≤γ≤45°. Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet.

Die in radialer Richtung R zwischen zweiter Gürtellage 17 und Karkasse 5 ausgebildete erste Gürtellage 14 erstreckt sich in Umfangsrichtung U über den gesamten Umfang des Fahrzeugluftreifens und in axialer Richtung A von linker Reifenschulter zur rechten Reifenschulter und ist als 0°-Lage ausgebildet. Hierzu ist die Gürtellage 14 aus parallelen fadenförmigen in Gummi eingebetteten Festigkeitsträgern ausgebildet, die sich geradlinig über den gesamten Umfang des Fahrzeugluftreifens unter Einschluss eines Winkels β mit 0° ≤ β ≤ 5° zur Umfangsrichtung U erstrecken und somit im Wesentlichen in Umfangsrichtung U des Fahrzeugluftreifens ausgerichtet sind.

Die in radialer Richtung R zwischen erster Gürtellage 14 und der unteren der beiden Arbeitslage 13 angeordneten zweite Gürtellage 17 erstreckt sich in Umfangsrichtung U über den gesamten Umfang des Fahrzeugluftreifens und in axialer Richtung A des Fahrzeugluftreifens von linker Reifenschulter bis zur rechten Reifenschulter. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 40° ≤ ε ≤ 75°, beispielsweise mit ε = 50°. Die Festigkeitsträger 27 der zweiten Gürtellage 17 sind in einer Ausführung - wie in Fig.2 dargestellt - mit einer längs der Erstreckung in Umfangsrichtung U des Reifens gesehen gleichen axialen Neigungsrichtung wie die Festigkeitsträger 23 der dritten Gürtellage 13 und somit mit einer entgegengesetzten axialen Neigungsrichtung wie die Festigkeitsträger 25 der vierten Gürtellage 15 ausgerichtet.

Alle vier Gürtellagen 14,17,13 und 15 erstrecken sich zu beiden axialen Seiten jeweils bis in eine Position in der jeweiligen Reifenschulter. Die Gürtellage 17 ist zumindest über einen Teil ihrer axialen Erstreckung in direktem Berührkontakt zu der über ihr angeordneten dritten Gürtellage (untere Arbeitslage) 13.

Die erste Gürtellage (0°-Lage) 14 erstreckt sich in axialer Richtung A über eine axiale Breite b, die dritte Gürtellage (untere Arbeitslage) 13 erstreckt sich in axialer Richtung A über eine axiale Breite a und die vierte Gürtellage (obere Arbeitslage) 15 erstreckt sich in axialer Richtung A über eine axiale Breite c im Reifen. Die zweite Gürtellage 17 erstreckt sich in axialer Richtung A über eine axiale Breite h im Reifen. Die Erstreckungsbreiten a, c, b und h sind dabei mit a > c > h ≥ b gewählt. Dabei erstreckt sich zu beiden axialen Seiten der ersten Gürtellage 14 die dritte Gürtellage 13 um eine axiale Erstreckungslänge e über die axiale Position des jeweiligen Gürtelrandes der ersten Gürtellage 14 hinaus. Ebenso erstreckt sich die vierte Gürtellage 15 in beide axiale Richtungen jeweils um eine axiale Erstreckungslänge d über die axiale Position des jeweiligen Gürtelrandes der ersten Gürtellage 14 hinaus. Für die Erstreckungslängen e und d dieses Überhangs gilt e > d. Das Maß d ist dabei mit d ≥ 10 mm ausgebildet. Das Maß e ist im Ausführungsbeispiel mit e ≤ 60 mm ausgebildet.

Die Gürtellage 17 erstreckt sich längs der gesamten axiale Erstreckung der ersten Gürtellage 14 in unmittelbarem Berührkontakt zur ersten Gürtellage 14 und endet in axialer Richtung A mit ihren beiden Gürtellagenrändern jeweils in einer axialen Position zwischen der axialen Position des nächstliegenden Gürtellagenrandes der ersten Gürtellage 14 und der axialen Position des nächstliegenden Gürtellagenrandes der radial äußeren Arbeitslage 15 im axialen Abstand k vom Gürtellagenrand der ersten Gürtellage 14 mit k < d < e und mit k≥0mm.

Im dargestellten Ausführungsbeispiel ist h>b und k>0mm gewählt.

Die Festigkeitsträger 27 sind Stahlkorde bekannter Art, beispielsweise des Typs "1+5", des Typs "3+6", des Typs "3+8" oder des Typs "3+9".

Die Festigkeitsträger 23 und 25 der beiden Arbeitslagen 13 und 15 sind dehnbare Stahlkorde bekannter Art, die bei Belastung auf Zug eine Bruchkraft F von F>2500N und bei 10% der Bruchkraft eine Dehnung D von D≥0,2% - beispielsweise mit 0,28% ≤ D ≤ 0,32% -aufweisen. Die Dehnung D der Festigkeitsträger ist dabei diejenige Dehnung, die beim vulkanisierten Reifen an dem von der Lage extrahierten Festigkeitsträger bestimmt wird. Die Messung der Dehnung erfolgt an Festigkeitsträger, die mit ihrer vollen Länge dem fertig vulkanisierten Reifen entnommen sind. Der Festigkeitsträger wird zur Messung soweit von Gummiresten befreit, dass der Festigkeitsträger mit der am Festigkeitsträger verbleibender Gummimenge keinen Durchmesser aufweist, der größer ist als der 1,5-fache maximale Außendurchmesser des ungummierten Festigkeitsträgers. Die Bestimmung der Dehnung erfolgt gemäß der ASTM D 2969 - 04.

Die Festigkeitsträger 23 und 25 sind beispielsweise Stahlkorde des Typs "3+8x0,35HT" mit einer Bruchkraft F, welche ca. 3000N beträgt, und mit einer Dehnung D von D>0,2% bei 10% der Bruchkraft.

Die Festigkeitsträger 24 sind in einer Ausführung Stahlkorde bekannter Art. In einer anderen Ausführung sind die Festigkeitsträger 24 Stahlkorde, die bei 10% der Bruchkraft eine Dehnung D mit D ≥ 0,2% - beispielsweise mit D = 0,5% - aufweisen. In einer Ausführung sind die Festigkeitsträger 24 Stahlkorde, die bei 10% der Bruchkraft eine Dehnung D mit D ≥ 1% - beispielsweise mit D = 1,3% - aufweisen.

Die Festigkeitsträger 24 sind beispielsweise Stahlkorde des Typs "3x7 HEHT".

In einem Ausführungsbeispiel ist β = 3°, α = 18°, γ = 18°, ε = 50°, d = 11 mm, k=8mm und e = 15 mm gewählt.

In einer nicht dargestellten alternativen Ausführung der oben genannten Ausführungen ist jeweils der Neigungswinkel α der Festigkeitsträger 23 der inneren Arbeitslage 13 größer ausgebildet als der Neigungswinkel γ der Festigkeitsträger 25 der äußeren Arbeitslage 15.

In einer nicht dargestellten alternativen Ausführung der oben genannten Ausführungen ist jeweils der Neigungswinkel α der Festigkeitsträger 23 der inneren Arbeitslage 13 kleiner ausgebildet als der Neigungswinkel γ der Festigkeitsträger 25 der äußeren Arbeitslage 15.

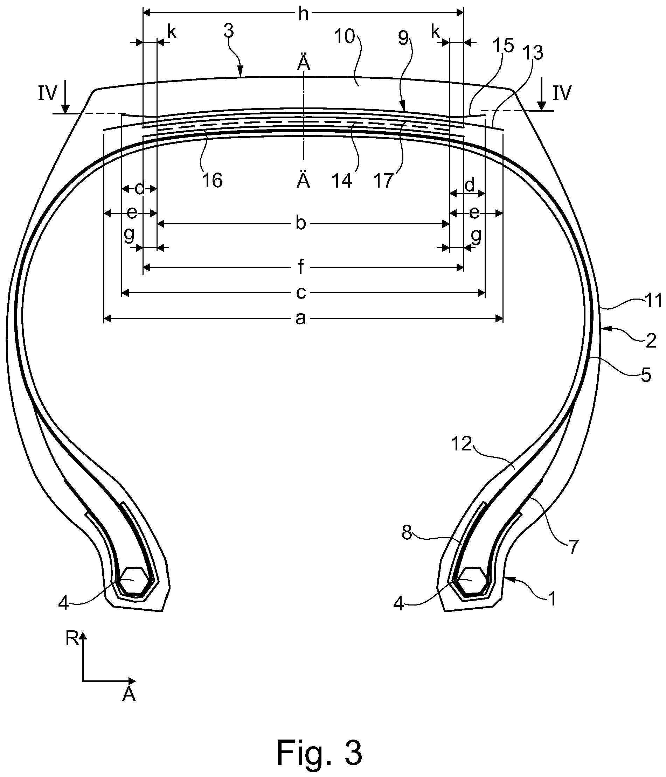

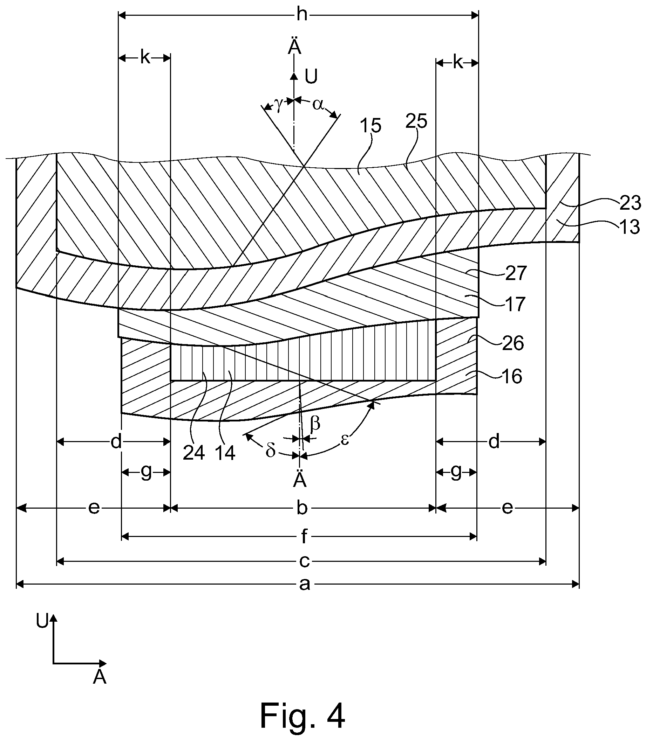

Fig.3 und Fig.4 zeigen eine weitere alternative Ausführung, bei der der Gürtel 9 zusätzlich zu den in den Fig.1 und Fig.2 dargestellten Gürtellagen 14,17,13 und 15 auf der radialen Innenseite der Gürtellage 14 - zwischen Gürtellage 14 und Karkasse 5 - mit einer zusätzlichen, fünften Gürtellage 16 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 16 ist aus einer Lage von in Gummi eingebetteten fadenförmigen parallelen Festigkeitsträgern 26 ausgebildet, welche sich über die gesamte axiale Breite f der Gürtellage 16 im Wesentlichen geradlinig erstrecken und einen Neigungswinkel δ zur Umfangsrichtung U einschließen mit 40°≤δ≤75°, beispielsweise mit δ =50°. Die Gürtellage 16 erstreckt sich über die gesamte axiale Erstreckung der Gürtellage 14 in unmittelbarem Berührkontakt zur Gürtellage 14 und endet in axialer Richtung A mit ihren beiden Gürtellagenrändern jeweils in einer axialen Position zwischen der axialen Position des nächstliegenden Gürtellagenrandes der ersten Gürtellage 14 und der axialen Position des nächstliegenden Gürtellagenrandes der vierten Gürtellage (radial äußeren Arbeitslage) 15 im axialen Abstand g vom Gürtellagenrand der ersten Gürtellage 14 mit g < d. Die Breite f ist das Maß der axialen Erstreckung der fünften Gürtellage 16 mit b < f und mit f < a. Im dargestellten Ausführungsbeispiel ist b < f < c < a gewählt.

In einem weiteren - in den Figuren 3 und 4 dargestellten - Ausführungsbeispiel ist zusätzlich f< h und g < k gewählt ausgebildet.

Die Festigkeitsträger 26 der fünften Gürtellage 16 sind - wie in Fig.4 dargestellt - mit einer längs der Erstreckung in Umfangsrichtung U des Reifens gesehen entgegengesetzten axialen Neigungsrichtung wie die Festigkeitsträger 27 der zweiten Gürtellage 17 ausgerichtet.

Die Festigkeitsträger 26 sind Stahlkorde bekannter Art, beispielsweise des Typs "1+5", des Typs "3+6", des Typs "3+8" oder des Typs "3+9".

In den oben im Zusammenhang mit den Figuren 1 bis 4 genannten Ausführungsbeispielen sind die Festigkeitsträger 27 und die Festigkeitsträger 26 Stahlkorde. In anderer, nicht dargestellter Ausführung sind die Festigkeitsträger 26 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind. In anderer, nicht dargestellter Ausführung sind die Festigkeitsträger 27 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

In anderer, nicht dargestellter Ausführung sind auch die Festigkeitsträger 23 und/oder die Festigkeitsträger 24 und/oder Festigkeitsträger 25 für den Einsatz in Nutzfahrzeugreifen geeignete Hybridkorde bekannter Art, bei denen Filamente oder Garne aus unterschiedlichen Materialien, wie z.B. Stahl, Polyamid, Glasfaser, Polyester oder Aramid hergestellt sind.

Fig. 4 zeigt ein Ausführungsbeispiel der zweiten Gürtellage 17 und der dritten Gürtellage 13, bei welchem die Festigkeitsträger 27 der zweiten Gürtellage 17 und die Festigkeitsträger 23 der dritten Gürtellage mit einer längs der Erstreckung in Umfangsrichtung U des Reifens gesehen entgegengesetzten axialen Neigungsrichtung ausgerichtet sind.

In anderer Ausführung sind - wie beispielhaft in Fig. 2 dargestellt - die Festigkeitsträger 27 der zweiten Gürtellage 17 und die Festigkeitsträger 23 der dritten Gürtellage mit einer längs der Erstreckung in Umfangsrichtung U des Reifens gesehen gleichen axialen Neigungsrichtung ausgerichtet.

Die Winkel α, β, γ, δ, ε bilden jeweils zumindest den in der Position der Äquatorebene des Reifens ermittelten Neigungswinkel des jeweiligen Festigkeitsträgers.

### Bezugszeichenliste

- 1: Wulstbereich
- 2: Seitenwand
- 3: Kronenbereich (Kopfbereich)
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 23: Festigkeitsträger
- 24: Festigkeitsträger
- 25: Festigkeitsträger
- 26: Festigkeitsträger
- 27: Festigkeitsträger

## Patentansprüche

1. Fahrzeugluftreifen für Nutzfahrzeuge mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus wenigstens vier von radial innen nach radial außen auf einander liegend angeordneten Gürtellagen (14,17,13,15) ausgebildet ist, wobei die von den vier Gürtellagen (14,17,13,15) in radialer Richtung R am weitesten innen angeordnete, erste Gürtellage (14) mit parallelen in Gummi eingebetteten Festigkeitsträgern (24), die auf der ersten Gürtellage (14) angeordnete zweite Gürtellage (17) mit parallelen in Gummi eingebetteten Festigkeitsträgern (277), die auf der zweiten Gürtellage (17) angeordnete dritte Gürtellage (13) mit parallelen in Gummi eingebetteten Festigkeitsträgern (23) und die auf der dritten Gürtellage (13) angeordnete vierte Gürtellage (15) mit parallelen in Gummi eingebetteten Festigkeitsträgern (25) ausgebildet ist,
wobei die dritte Gürtellage (13) und die vierte Gürtellage (15) Arbeitslagen sind, bei denen die Festigkeitsträger (23) der dritten Gürtellage (13) in ihrer Ausrichtung einen Winkel α zur Umfangsrichtung U mit 10°≤α≤45° und die Festigkeitsträger (25) der vierten Gürtellage (15) in ihrer Ausrichtung jeweils einen Winkel γ zur Umfangsrichtung U mit 10°≤γ≤45°einschließen, wobei in Umfangsrichtung U des Fahrzeugreifens gesehen die Festigkeitsträger (23) der dritten Gürtellage (13) eine entgegengesetzte axiale Neigungsrichtung zu den Festigkeitsträgern (25) der vierten Gürtellage (15) aufweisen, und
wobei die Festigkeitsträger (24) der ersten Gürtellage (14) in ihrer Ausrichtung einen Winkel β zur Umfangsrichtung U mit 0°≤β≤5° einschließen und die Festigkeitsträger (27) der zweiten Gürtellage (17) in ihrer Ausrichtung einen Winkel ε zur Umfangsrichtung U mit 40°≤ε≤75°,
**dadurch gekennzeichnet,**
**dass** die erste Gürtellage (14) in ihrer axialen Erstreckung im Fahrzeugluftreifen kleiner ausgebildet ist als die dritte und die vierte Gürtellage (13,15) und kleiner oder gleich der axialen Erstreckung der zweiten Gürtellage (17) des Gürtels.

2. Fahrzeugluftreifen gemäß den Merkmalen von Anspruch 1,
wobei in Umfangsrichtung U gesehen die Festigkeitsträger (23) der dritten Gürtellage (13) und die Festigkeitsträger (27) der zweiten Gürtellage (17) die gleiche axiale Neigungsrichtung aufweisen.

3. Fahrzeugluftreifen gemäß den Merkmalen von Anspruch 1,
wobei die dritte Gürtellage (13) in ihrer axialen Erstreckung im Fahrzeugluftreifen größer ausgebildet ist als alle anderen Gürtellagen (14,15,17) des Gürtels.

4. Fahrzeugluftreifen gemäß den Merkmalen von Anspruch 1,
wobei radial innerhalb der ersten Gürtellage (14) eine fünfte Gürtellage (16) angeordnet ist mit parallelen in Gummi eingebetteten Festigkeitsträgern (26), die in ihrer Ausrichtung einen Winkel δ zur Umfangsrichtung U des Fahrzeugluftreifens mit 40°≤δ≤75° - insbesondere mit δ =50°- einschließen, und wobei in Umfangsrichtung U des Fahrzeugreifens gesehen die Festigkeitsträger (26) der fünften Gürtellage (16) eine entgegengesetzte axiale Neigungsrichtung zu den Festigkeitsträgern (27) der zweiten Gürtellage (17) aufweisen.

5. Fahrzeugluftreifen gemäß den Merkmalen von Anspruch 4,
wobei in Umfangsrichtung U des Fahrzeugreifens gesehen die Festigkeitsträger (26) der fünften Gürtellage (16) eine gleiche axiale Neigungsrichtung zu den Festigkeitsträgern (23) der dritten Gürtellage (13) aufweisen.

6. Fahrzeugluftreifen gemäß den Merkmalen von Anspruch 4 oder 5,
wobei die fünfte Gürtellage (16) in ihrer axialen Erstreckung im Fahrzeugluftreifen kleiner als die dritte Gürtellage (13) und größer oder gleich der Breite der ersten Gürtellage (14) ausgebildet ist.

7. Fahrzeugluftreifen gemäß den Merkmalen von einem oder mehreren der vorangegangenen Ansprüche,
wobei die Festigkeitsträger (23) der dritten Gürtellage (13) und die Festigkeitsträger (25) der vierten Gürtellage (15) Stahlkorde sind.

8. Fahrzeugluftreifen gemäß den Merkmalen von einem oder mehreren der vorangegangenen Ansprüche,
wobei die Festigkeitsträger (23,25) der beiden Arbeitslagen (13,15) im Reifen dehnbar ausgebildet sind mit einer Dehnung D von D ≥ 0,2% bei 10% der Bruchkraft.

9. Fahrzeugluftreifen gemäß den Merkmalen von einem oder mehreren der vorangegangenen Ansprüche,
wobei die Festigkeitsträger (24) der ersten Gürtellage (14) Festigkeitsträger aus Stahl sind.

10. Fahrzeugluftreifen gemäß den Merkmalen von Anspruch einem oder mehreren der vorangegangenen Ansprüche,
wobei die Festigkeitsträger (24) der ersten Gürtellage (14) Stahlkorde sind, die bei 10% der Bruchkraft eine Dehnung D mit D≥ 0,2 % - insbesondere mit D ≥ 1 % - aufweisen.

11. Fahrzeugluftreifen gemäß den Merkmalen von einem oder mehreren der vorangegangenen Ansprüche,
wobei die Festigkeitsträger (27) der zweiten Gürtellage (17) Stahlkorde sind.

12. Fahrzeugluftreifen gemäß den Merkmalen von Anspruch 4,
wobei die Festigkeitsträger (26) der fünften Gürtellage (16) Stahlkorde sind.

## Claims

1. Pneumatic vehicle tyre for utility vehicles, having a carcass (5), having a belt (9) which is constructed radially outside the carcass (5) and having a profiled tread (10) which is constructed on the belt (9) radially outside the belt (9), wherein the belt (9) is formed from at least four belt plies (14, 17, 13, 15) arranged lying one on top of the other from the radial inside to the radial outside, wherein the first belt ply (14) of the four belt plies (14, 17, 13, 15), which is arranged furthest to the inside in the radial direction R, is formed with parallel strength members (24) embedded in rubber, the second belt ply (17), arranged on the first belt ply (14), is formed with parallel strength members (277) embedded in rubber, the third belt ply (13), arranged on the second belt ply (17), is formed with parallel strength members (2.3) embedded in rubber, and the fourth belt ply (15), arranged on the third belt ply (13), is formed with parallel strength members (25) embedded in rubber,
wherein the third belt ply (13) and the fourth belt ply (15) are working plies, in which the strength members (23) of the third belt ply (13) enclose, in terms of their orientation, an angle α with the circumferential direction U, where 10° ≤ α ≤ 45°, and the strength members (25) of the fourth belt ply (15) each enclose, in terms of their orientation, an angle γ with the circumferential direction U, where 10° ≤ γ ≤ 45°, wherein, as viewed in the circumferential direction U of the vehicle tyre, the strength members (23) of the third belt ply (13) have an opposite axial direction of inclination in relation to the strength members (25) of the fourth belt ply (15), and
wherein the strength members (24) of the first belt ply (14) enclose, in terms of their orientation, an angle β with the circumferential direction U, where 0° ≤ β ≤ 5°, and the strength members (27) of the second belt ply (17) enclose, in terms of their orientation, an angle ε with the circumferential direction U, where 40° ≤ ε ≤ 75°,
**characterized**
**in that** the first belt ply (14) is formed so as to be smaller, in terms of its axial extent in the pneumatic vehicle tyre, than the third and the fourth belt plies (13, 15) and smaller than or equal to the axial extent of the second belt ply (17) of the belt.

2. Pneumatic vehicle tyre according to the features of Claim 1,
wherein, as viewed in the circumferential direction U, the strength members (23) of the third belt ply (13) and the strength members (27) of the second belt ply (17) have the same axial direction of inclination.

3. Pneumatic vehicle tyre according to the features of Claim 1,
wherein the third belt ply (13) is formed so as to be larger, in terms of its axial extent in the pneumatic vehicle tyre, than all of the other belt plies (14, 15, 17) of the belt.

4. Pneumatic vehicle tyre according to the features of Claim 1,
wherein, radially inside the first belt ply (14), there is arranged a fifth belt ply (16) with parallel strength members (26) embedded in rubber, which strength members, in terms of their orientation, enclose an angle δ with the circumferential direction U of the pneumatic vehicle tyre, where 40° ≤ δ ≤ 75° - in particular where δ = 50° - and wherein, as viewed in the circumferential direction U of the vehicle tyre, the strength members (26) of the fifth belt ply (16) have an opposite axial direction of inclination in relation to the strength members (27) of the second belt ply (17).

5. Pneumatic vehicle tyre according to the features of Claim 4,
wherein, as viewed in the circumferential direction U of the vehicle tyre, the strength members (26) of the fifth belt ply (16) have the same axial direction of inclination in relation to the strength members (23) of the third belt ply (13).

6. Pneumatic vehicle tyre according to the features of Claim 4 or 5,
wherein the fifth belt ply (16) is formed so as to be smaller, in terms of its axial extent in the pneumatic vehicle tyre, than the third belt ply (13) and larger than or equal to the width of the first belt ply (14).

7. Pneumatic vehicle tyre according to the features of one or more of the preceding claims,
wherein the strength members (23) of the third belt ply (13) and the strength members (25) of the fourth belt ply (15) are steel cords.

8. Pneumatic vehicle tyre according to the features of one or more of the preceding claims,
wherein the strength members (23, 25) of the two working plies (13, 15) in the tyre are designed to be extensible, with an elongation D of D ≥ 0.2% at 10% of the breaking force.

9. Pneumatic vehicle tyre according to the features of one or more of the preceding claims,
wherein the strength members (24) of the first belt ply (14) are strength members composed of steel.

10. Pneumatic vehicle tyre according to the features of Claim one or more of the preceding claims,
wherein the strength members (24) of the first belt ply (14) are steel cords which, at 10% of the breaking force, exhibit an elongation D of D ≥ 0.2 % - in particular of D ≥ 1%.

11. Pneumatic vehicle tyre according to the features of one or more of the preceding claims,
wherein the strength members (27) of the second belt ply (17) are steel cords.

12. Pneumatic vehicle tyre according to the features of Claim 4,
wherein the strength members (26) of the fifth belt ply (16) are steel cords.

## Revendications

1. Pneumatique de véhicule pour des véhicules utilitaires avec une carcasse (5), avec une ceinture (9) construite radialement à l'extérieur de la carcasse (5) et avec une bande de roulement profilée (10) construite sur la ceinture (9) radialement à l'extérieur de la ceinture (9), dans lequel la ceinture (9) est formée d'au moins quatre couches de ceinture disposées l'une au-dessus de l'autre radialement de l'intérieur vers l'extérieur (14, 17, 13, 15), dans lequel la première couche de ceinture (14) des quatre couches de ceinture (14, 17, 13, 15) disposée le plus à l'intérieur en direction radiale R est formée d'éléments de résistance parallèles (24) noyés dans la gomme, la deuxième couche de ceinture (17) disposée sur la première couche de ceinture (14) est formée d'éléments de résistance parallèles (277) noyés dans la gomme, la troisième couche de ceinture (13) disposée sur la deuxième couche de ceinture (17) est formée d'éléments de résistance parallèles (23) noyés dans la gomme et la quatrième couche de ceinture (15) disposée sur la troisième couche de ceinture (13) est formée d'éléments de résistance parallèles (25) noyés dans la gomme,
dans lequel la troisième couche de ceinture (13) et la quatrième couche de ceinture (15) sont des couches de travail, dans lesquelles les éléments de résistance (23) de la troisième couche de ceinture (13) forment par leur orientation un angle α avec la direction périphérique U avec 10° ≤ α ≤ 45° et les éléments de résistance (25) de la quatrième couche de ceinture (15) forment par leur orientation un angle γ avec la direction périphérique U avec 10° ≤ γ ≤ 45°, dans lequel, vus dans la direction périphérique U du pneumatique de véhicule, les éléments de résistance (23) de la troisième couche de ceinture (13) présentent une direction d'inclinaison axiale opposée par rapport aux éléments de résistance (25) de la quatrième couche de ceinture (15) et dans lequel les éléments de résistance (24) de la première couche de ceinture (14) forment par leur orientation un angle β avec la direction périphérique U avec 0° ≤ β ≤ 5° et les éléments de résistance (27) de la deuxième couche de ceinture (17) forment par leur orientation un angle ε avec la direction périphérique U avec 40° ≤ ε ≤ 75°, **caractérisé en ce que** la première couche de ceinture (14) est formée avec une extension axiale dans le pneumatique de véhicule inférieure à la troisième et à la quatrième couche de ceinture (13, 15) et inférieure ou égale à l'extension axiale de la deuxième couche de ceinture (17) de la ceinture.

2. Pneumatique de véhicule selon les caractéristiques de la revendication 1, dans lequel, vus en direction périphérique U, les éléments de résistance (23) de la troisième couche de ceinture (13) et les éléments de résistance (27) de la deuxième couche de ceinture (17) présentent la même direction d'inclinaison axiale.

3. Pneumatique de véhicule selon les caractéristiques de la revendication 1, dans lequel la troisième couche de ceinture (13) est réalisée avec une plus grande extension axiale dans le pneumatique de véhicule que toutes les autres couches de ceinture (14, 15, 17) de la ceinture.

4. Pneumatique de véhicule selon les caractéristiques de la revendication 1, dans lequel une cinquième couche de ceinture (16) est disposée radialement à l'intérieur de la première couche de ceinture (14) avec des éléments de résistance parallèles (26) noyés dans la gomme, qui forment par leur orientation un angle δ avec la direction périphérique U du pneumatique de véhicule avec 40° ≤ δ ≤ 75° - en particulier avec δ = 50° -, et dans lequel, vus en direction périphérique U du pneumatique de véhicule, les éléments de résistance (26) de la cinquième couche de ceinture (16) présentent une direction d'inclinaison axiale opposée aux éléments de résistance (27) de la deuxième couche de ceinture (17).

5. Pneumatique de véhicule selon les caractéristiques de la revendication 4, dans lequel, vus en direction périphérique U du pneumatique de véhicule, les éléments de résistance (26) de la cinquième couche de ceinture (16) présentent une direction d'inclinaison axiale identique aux éléments de résistance (23) de la troisième couche de ceinture (13).

6. Pneumatique de véhicule selon les caractéristiques d'une revendication 4 ou 5, dans lequel la cinquième couche de ceinture (16) est réalisée avec une extension axiale dans le pneumatique de véhicule inférieure à la troisième couche de ceinture (13) et supérieure ou égale à la largeur de la première couche de ceinture (14).

7. Pneumatique de véhicule selon les caractéristiques d'une ou de plusieurs des revendications précédentes, dans lequel les éléments de résistance (23) de la troisième couche de ceinture (13) et les éléments de résistance (25) de la quatrième couche de ceinture (15) sont des câbles d'acier.

8. Pneumatique de véhicule selon les caractéristiques d'une ou de plusieurs des revendications précédentes, dans lequel les éléments de résistance (23, 25) des deux couches de travail (13, 15) dans le pneu sont réalisées sous forme extensible avec un allongement D de D ≥ 0,2 % à 10 % de la charge de rupture.

9. Pneumatique de véhicule selon les caractéristiques de la revendication une ou plusieurs des revendications précédentes, dans lequel les éléments de résistance (24) de la première couche de ceinture (14) sont des éléments de résistance en acier.

10. Pneumatique de véhicule selon les caractéristiques d'une ou de plusieurs des revendications précédentes, dans lequel les éléments de résistance (24) de la première couche de ceinture (14) sont des câbles d'acier, qui présentent à 10 % de la charge de rupture un allongement D avec D ≥ 0,2 % - notamment avec D ≥ 1 %.

11. Pneumatique de véhicule selon les caractéristiques d'une ou de plusieurs des revendications précédentes, dans lequel les éléments de résistance (27) de la deuxième couche de ceinture (17) sont des câbles d'acier.

12. Pneumatique de véhicule selon les caractéristiques de la revendication 4, dans lequel les éléments de résistance (26) de la cinquième couche de ceinture (16) sont des câbles d'acier.
